# EUROPEAN PATENT SPECIFICATION

(11) **EP 1 919 139 B1**
(45) Date of publication and mention of the grant of the patent: **22.02.2012**
(21) Application number: 06775448.1
(22) Date of filing: 22.08.2006
(51) Int. Cl.: H04J 3/06

(54) **SYSTEM AND METHOD FOR REALIZING NETWORK SYNCHRONIZATION BY PACKET NETWORK**
SYSTEM UND VERFAHREN ZUM REALISIEREN DER NETZWERKSYNCHRONISATION DURCH EIN PAKETNETZWERK
SYSTEME ET PROCEDE DE REALISATION DE SYNCHRONISATION DE RESEAU PAR RESEAU EN PAQUETS

(30) Priority: 24.08.2005 CN 200510093014
(43) Date of publication of application: 07.05.2008
(73) Proprietor: Huawei Technologies Co., Ltd., Shenzhen, Guangdong Province 518129 (CN)
(72) Inventor: QU, Zhijun, 518129 Shenzhen, Guangdong Province (CN)
(74) Representative: Thun, Clemens
(86) International application number: PCT/CN2006/002130
(87) International publication number: WO 2007/022706

(56) References cited:
- WO-A1-2004/023688
- CN-A- 1 474 550
- CN-A- 1 525 704
- US-A- 5 828 670
- US-A1- 2002 136 232
- US-A1- 2004 223 518
- KIHARA M: "PERFORMANCE ASPECTS OF REFERENCE CLOCK DISTRIBUTION FOR EVOLVING DIGITAL NETWORKS" IEEE COMMUNICATIONS MAGAZINE, IEEE SERVICE CENTER, PISCATAWAY, US, vol. 27, no. 4, 1 April 1989 (1989-04-01), pages 24-34, XP000051533 ISSN: 0163-6804

## Description

### Field of the Invention

The present invention relates to the communication field and in particular to a device, method and system for network synchronization over a packet network.

### Background of the Invention

Existing networks can generally be divided into two major types. One type is a synchronized circuit domain network which currently provides telephone service and can strictly guarantee a transmission delay and a transmission sequence of the service through synchronization timing throughout the network. The other type is a connectionless IP packet network which provides Internet data service and does not strictly guarantee the transmission delay or the transmission sequence of packets.

As multi-service is required and IP packet network is deployed on a large scale, the bandwidth that the IP packet network can offer is increased, and the cost of deploying the IP packet network is reduced. Therefore, more and more providers tend to bear the multi-service through the IP. However, the existing IP network is still a connectionless network without synchronization. When service of Best effort is provided, in some aspects, especially in respect of synchronization timing throughout the network, requirement on circuit service can not be met. Therefore, some providers propose solutions for provision of synchronization timing over an IP packet network, for example, some providers propose solutions of Real time Transport Protocol (RTP), Adaptive Clock Recovery (ACM). However, these solutions fail to solve essentially the problem of provision of timing throughout the IP packet network and pose to the contrary a high requirement on the network, which includes a transmission delay over the network, a packet loss ratio over the network. The deterioration of any index may have deadly influence on the above solutions.

Currently, an optional technical solution for network synchronization over an IP packet network is that a synchronization timing network is built together with the IP packet network in order to implement provision of circuit service over the IP packet network, and a method of superposition is adopted to meet requirement on network synchronization.

A synchronization network has to be built newly in the existing solution, which results in a drawback of a high network building cost. Further, a data network and a circuit network have not been unified completely in the existing solution, which results in relatively difficult maintenance operations.

In the paper of KIHARA M: "PERFORMANCE ASPECTS OF REFERENCE CLOCK DISTRIBUTION FOR EVOLVING DIGITAL NETWORKS" IEEE COMMUNICATIONS MAGAZINE, IEEE SERVICE CENTER, PISCATAWAY, US, vol. 27, no. 4, April 1, 1989, pages 24-34, ISSN: 0163-6804, there is disclosed a solution as follows. A timing signal from a higher-level slave node or from a master node is input to a phase comparator. A Phase-Locked Loop (PLL) locks to this timing signal and regenerates a new reference clock. The regenerated clock is made available to other slave node devices, and is subsequently distributed to lower- level nodes.

### Summary of the Invention

In view of above, there is provided a device, a system and method for network synchronization over a packet network, whereby uniform timing throughout the network can be implemented properly, the IP packet network without timing is rebuilt into a synchronized network similar to a circuit network, and the advantage of a high bandwidth of the IP packet network remains. Thus, both service of circuit simulation and multi-service of high-bandwidth may be provided.

Technical solutions according to embodiments of the present invention are as follows.

There is provided a network device in a packet communication system, the network device comprising a plurality of interfaces, characterized by that: the network device is capable of IP synchronization and comprises a master control board, a switching backplane and at least two interface boards that each is provided with at least one interface among the plurality of interfaces, wherein a first interface provided in a first interface board comprises a first media access control, MAC, layer processing unit and a first physical layer processing unit, the master control board comprises a clock processing unit and a second interface provided in a second interface board comprises a second MAC layer processing unit and a second physical layer processing unit;
the first physical layer processing unit is adapted to exchange data with a first processing device in the packet communication system over a first data link, recover a clock signal from the first data link and transmit the recovered clock signal to the first MAC layer processing unit for reception of data and the clock processing unit of the master control board via the switching backplane, respectively;
the clock processing unit of the master control board is adapted to process the recovered clock signal to obtain a reference clock signal and transmit the reference clock signal to the second interface board via the switching backplane; and
the second physical layer processing unit is adapted to exchange data with a second processing device in the packet communication system over a second data link, transmit data signals from the second MAC layer processing unit over the second data link, wherein the second physical layer processing unit is adapted to receive the reference clock signal and to transmit periodically the reference clock signal to a second processing device over the second data link and/or to mix the data signals from the second MAC layer processing unit with the reference clock signal as a line clock and transmit the mixed data signals to the second processing device.

Alternative technical solutions according to embodiments of the present invention are as follows.

Particularly, the first physical layer processing unit is adapted mix data with clock information in a code mode and transmit the mixed data with clock information to the first MAC layer processing unit for reception of data.

Particularly, the plurality of interfaces are Ethernet interfaces or other IP packet network interfaces.

Particularly, the clock processing unit of the master control board comprise a phase locked loop circuit and a signal drive circuit; wherein: the phase locked loop circuit is adapted to lock the recovered clock signal from the first interface, and the signal drive circuit is adapted to drive the locked clock signal locked by the phase locked loop circuit into multiple signals and to transmit the multiple signals to the second interface board and other second interface board as the reference clock signal, respectively.

Particularly, the switching backplane is an Ethernet switching backplane or other IP packet network switching backplanes.

Particularly, the second interface further comprises a clock processing unit, adapted to process the reference clock signal from the master control board and transmit the reference clock signal processed thereon to the second MAC layer processing unit and the second physical layer processing unit so that the second physical layer processing unit transmits periodically the reference clock signal processed by the clock processing unit of the second interface to a second network device over the second data link and/or to mix the data signals from the second MAC layer processing unit with the reference clock signal the clock processing unit of the second interface as the line clock and transmit the mixed data signals to the second network device.

Particularly, when the first interface board transmits data to the first network device, the first physical layer processing unit is adapted to receive data transmitted from the first MAC layer processing unit, and to mix signals of the received data with a line clock signal, and transmits the mixed data signals with the line clock signal.

There is further provided a packet communication system including a network device aforementioned, the packet communication system further includes a first processing device interfaced with the first interface of the network device and a second processing device interfaced with the second interface of the network device.

There is further provided a method for network synchronization in a packet network, including:
recovering, by a first physical layer processing unit of a first interface at a first interface board of a network device, a clock signal over a first data link, wherein the network device is capable of IP synchronization and the first physical layer processing unit is adapted to exchange data with a first processing device over the first data link;
transmitting the recovered clock signal from the first physical layer processing unit to a first media access control, MAC, layer processing unit of the first interface for reception of data and a clock processing unit at a master control board of the network device via a switching backplane, respectively;
processing, by the clock processing unit at the master control board, the recovered clock signal to obtain a reference clock signal;
transmitting the reference clock signal from the clock processing unit at the master control board to a second interface board of the network device via the switching backplane;
transmitting, by a second physical layer processing unit of a second interface at the second interface board, periodically the reference clock signal to a second network device over a second data link and/or mixed data signals with data signals from the second MAC layer processing unit and the reference clock signal transmitted from the master control board to a second processing device over a second data link, wherein the second physical layer processing unit is adapted to exchange data with the second processing device over the data link.

Particularly, the first interface and the second interface are Ethernet interfaces or other IP packet network interfaces.

Particularly, before mixing data signals with the clock signal recovered from the data link via the first interface, the method further includes:
locking, by a phase locked loop circuit of the clock processing unit at the control board, the recovered clock signal from the first interface; and
driving, by a signal drive circuit of the clock processing unit at the control board, the locked signal into multiple signals provided for the second interface and other second interfaces as the reference clock signal, respectively.

As can be seen from the above technical solutions according to embodiments of the present invention, a clock signal over a data link of a processing device at upper-level in a packet network is recovered and transmitted to a processing device at low-level, and the processing devices are synchronized by means of the clock signal. With the present invention, uniform timing throughout the network can be implemented properly, the IP packet network without timing is rebuilt into a synchronized network similar to a circuit network, and the advantage of a high bandwidth of the IP packet network remains. Thus, both service of circuit simulation and multi-service of high-bandwidth may be provided.

### Brief Description of the Drawings

Figure 1 illustrates the framework of IP synchronized network devices;

Figure 2 is an operational principle diagram illustrating an Ethernet interface in an interface board according to embodiments of the present invention;

Figure 3 is an operational principle diagram illustrating that two different devices are interfaced and interconnected via an Ethernet interface according to embodiments of the present invention;

Figure 4 is a principle diagram illustrating a method according to embodiments of the present invention; and

Figure 5 is a schematic diagram illustrating the network architecture of an IP synchronized network according to embodiments of the present invention.

### Detailed Description of the Invention

There is provided a device a system and method for network synchronization over a packet network. According to embodiments of the present invention, a clock signal over a data link coupled with a processing device at upper-level in the packet network is recovered and transmitted to a processing device at lower-level in the packet network, and synchronization between the processing devices is implemented according to the clock signal.

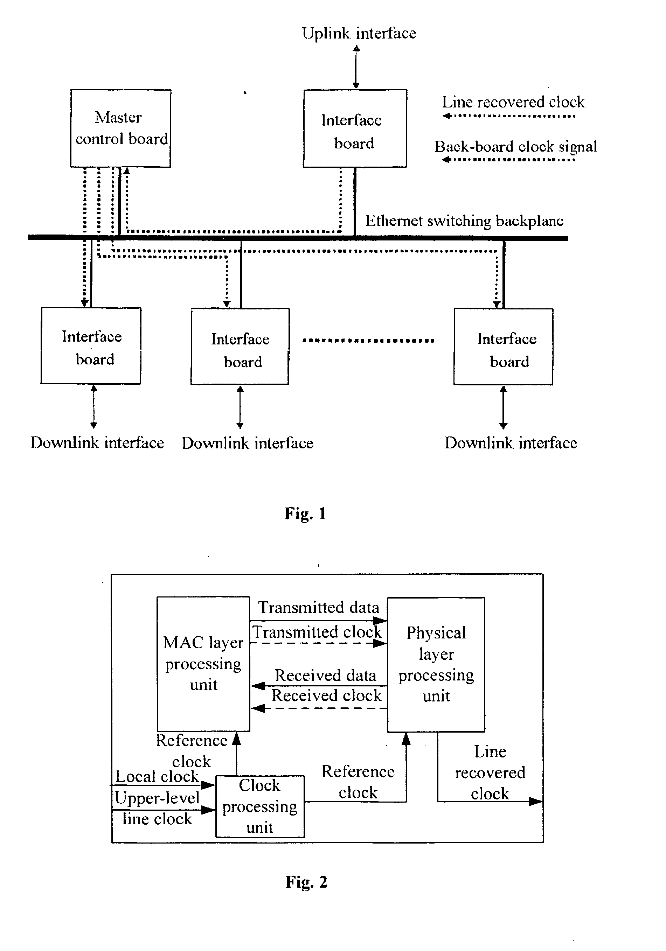

According to a first embodiment of the present invention, the framework of a network device capable of IP synchronization is illustrated in Figure 1. The network device may be one of a plurality of processing devices at different levels, and the processing device includes a transmission module and a reception module. The transmission module may be provided in a downlink interface board, and the reception module may be provided in an uplink interface board. A switching backplane and a master control board may be provided between the uplink interface board and the downlink interface board. Particularly, the switching backplane may be an Ethernet switching backplane or other IP packet network switching backplanes.

The uplink interface board exchanges data with a processing device at upper-level over a data link via an interface of the uplink interface board. When data is required to be received from the processing device at upper-level, the uplink interface board recovers a clock signal from the data link via the interface and transmits the recovered clock signal to the master control board via the switching backplane. When data is required to be transmitted to the processing device at upper-level, signals of data to be transmitted may be mixed with a reference clock signal obtained by processing the recovered clock signal, and then the mixed signals are transmitted over a data link via an interface of the uplink interface board to the processing device at upper-level.

The master control board is provided with a phase locked loop circuit and a signal drive circuit. The phase locked loop circuit is adapted to lock a clock signal. The signal drive circuit is adapted to drive the locked clock signal into multiple signals which are transmitted to corresponding downlink interface boards via the switching backplane.

The downlink interface board exchanges data with a processing device at lower-level over a data link via an interface of the downlink interface board. When data is required to be transmitted to the processing device at lower-level, the downlink interface board transmits the data by using a locked clock signal transmitted from the master control board. For example, in the downlink interface board, signals of data to be transmitted are mixed with the locked clock signal, and then the mixed data signals with the locked signal are transmitted over a data link via an interface of the downlink interface board to the processing device at lower-level. When data is required to be received from the processing device at lower-level, a reception clock signal employed may be a clock signal recovered from the data link via the interface interfaced with the processing device at lower-level or a reference clock signal output from a clock processing unit.

Both the uplink interlace board and the downlink interface board described above are exchangeable. Any of the interface boards in the system may become uplink or downlink. Therefore, any of the interface boards may recover a clock signal from an input line and the recovered clock signal may be transmitted to the master control board so as to be processed. Any of the interface boards may output a recovered clock signal to the master control board and receive a clock signal transmitted from the master control board.

As illustrated in Figure 2, there is provided in the uplink interface board described above an uplink interface including a clock processing unit, a MAC layer processing unit, and a physical layer processing unit.

Particularly, the physical layer processing unit is adapted to exchange data with a processing device at lower-level for the uplink over a data link via an interface of the uplink interface board.

When the uplink interface board receives data transmitted from the processing device at lower-level for the uplink over the data link via the interface of the uplink interface board, the physical layer processing unit recovers a clock signal from the data link and transmits the recovered clock signal to the MAC layer processing unit for reception of the data and to a clock processing unit in the master control board for processing.

When the uplink interface board transmits data to the processing device at lower-level for the uplink over the data link, the physical layer processing unit firstly receives data transmitted from the MAC layer processing unit, then mixes the signals of the received data with a line clock signal transmitted from the processing device at upper-level for the uplink, and transmits the mixed data signals to the processing device at lower-level for the uplink over the data link.

The clock processing unit is adapted to process the recovered clock signal received to obtain a reference clock signal and to transmit the reference clock to the physical layer processing unit and the MAC layer processing unit, so that the physical layer processing unit and the MAC layer processing unit may transmit periodically the reference clock as the line clock to the processing device at lower-level for the uplink.

The MAC layer processing unit is adapted to receive data transmitted from physical layer processing unit by using the recovered clock signal from the physical layer processing unit, and to transmit the data to the physical layer processing unit by using the reference clock transmitted from the clock processing unit.

As illustrated in Figure 2, there is provided in the downlink interface board described above a downlink interface including a clock processing unit, a MAC layer processing unit, and a physical layer processing unit.

Particularly, the physical layer processing unit is adapted to receive and transmit data over a data link in a way that the physical layer processing unit may transmit data by using a clock signal recovered from an upper-level line transmitted from the master control board, and receive data by using a local clock signal from a local interface or a clock signal from the upper-level line, and to transmit the clock signal from the upper-level line to the MAC layer processing unit. The physical layer processing unit is adapted to mix in a code mode the data signals with the clock signal recovered from the upper-level line transmitted from the master control board and transmit the mixed data signals to a processing device at lower-level for the downlink.

The clock processing unit is adapted to process the clock signals to obtain a reference clock signal and to transmit the reference clock signal to the physical layer processing unit and the MAC layer processing unit, and the physical layer processing unit and the MAC layer processing unit in the downlink interface may transmit periodically the reference clock as the line clock signal to the processing device at lower-level for the downlink.

The MAC layer processing unit is adapted to receive the data transmitted from the physical layer processing unit by using the reference clock of the clock processing unit or the line recovered clock and to transmit the data to the physical layer processing unit by using the reference clock transmitted from the clock processing unit.

The uplink interface and the downlink interface described above may be Ethernet interfaces or other IP packet network interfaces.

The uplink interface board receives the data transmitted from the processing device at lower-level for the uplink via an uplink interface such as an Ethernet interface or other interface, recovers the clock signal from the data link, and transmits the recovered clock signal to the master control board via the switching backplane. The recovered clock signal is locked by a phase locked loop circuit provided on the master control board, and the locked clock signal is driven into multiple clock signals by the signal drive circuit, and then the multiple clock signals are transmitted to a plurality of downlink interface boards via the switching backplane. The downlink interface boards each lock the clock signal output from the switching backplane, and mix the data signal with the clock signal locked by the downlink interface boards, and output the mixed signals via a downlink interface such as an Ethernet interface or other interfaces.

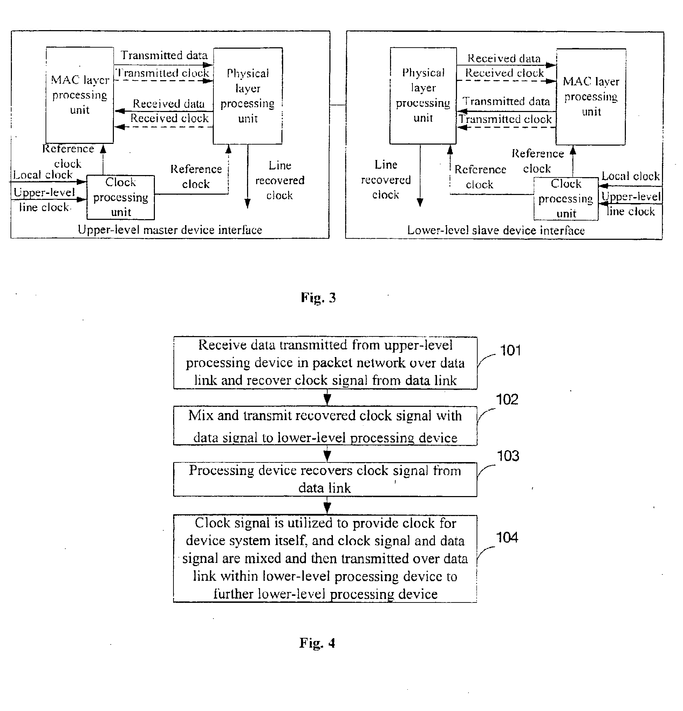

Descriptions will be presented below of an operational procedure for synchronization throughout the network when two different devices are interfaced via an Ethernet interface according to embodiments of the present invention, as illustrated in Figure 3.

Clock synchronization information is required to be conveyed between Ethernet interfaces when two different devices are interfaced via the Ethernet interface. The Ethernet interface typically includes a MAC layer processing unit and a PHY layer processing unit. For clear descriptions of technical solutions of the present invention, interfacing interfaces are respectively regarded as an upper-level master device interface and a lower-level salve device interface. Particularly, the upper-level master device interface synchronizes an upper-level line clock, which is then processed by the clock processing unit to provide the MAC layer processing unit and the PHY layer processing unit respectively with a reference clock. The PHY layer processing unit mixes data with the clock information in a code mode and transmits the mixed data with clock information to the MAC layer processing unit. The MAC layer processing unit receives the data by using a clock signal recovered from the line by the PHY layer processing unit or a line clock signal transmitted from an upper-level master device.

The PHY layer processing unit of the lower-level slave device interface receives the data from a reception line, and recovers and transmits the clock signal to the MAC layer processing unit. The MAC layer processing unit receives the data by using the recovered clock signal. The recovered clock signal may be provided for the MAC layer processing unit to transmit the data. And the recovered clock signal from the reception line is transmitted to an interface device lower than the lower-level slave device interface in level after being processed by the clock processing unit in the master control board.

The Ethernet interface above mainly refers to I 100BASE-X/1000BASE-X.

A method according to a second embodiment of the present invention is illustrated in Figure 4.

Block 101: In a processing device, Data transmitted from a processing device at upper-level in a packet network is received over a data link and a clock signal is recovered from the data link.

Block 102: In the processing device, the recovered clock signal and the data signals are mixed and then the mixed signals are transmitted to a processing device at lower-level.

Block 103: The lower-level processing device recovers the clock signal from the data link.

Block 104: The clock signal is adaptable to be provided for a clock signal for the processing device at lower-level system itself. The processing device at lower-level mixes the clock signal and the data signals and transmits the mixed signals over a data link to a processing device at further lower-level.

The processing device at further lower-level proceeds with the block 103.

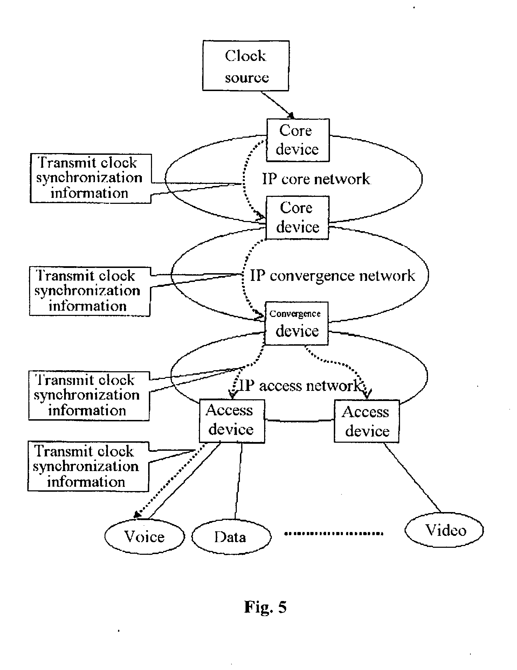

An implementation procedure according to the second embodiment of the present invention will be described in details below in connection with a schematic diagram illustrating the network architecture of an IP synchronization network illustrated in Figure 5.

In the IP packet network, clock synchronization information is provided and conveyed via an existing data channel. A core network device is synchronized with a high-precision clock source of which the clock information is provided for use in the core network device; the core network device transmits the clock information via an in-band data channel to an IP device at a convergence layer. The IP device at the convergence layer recovers a clock from a data link and provides the recovered clock for use in the IP device at the convergence layer, and transmits the clock information of the recovered clock via an in-band data channel to an access device. In a same way of processing as the convergence device, the access device recovers the clock for use in the access device, in addition, the access device may transmit synchronization information via an data channel to a user terminal device if necessary. For example, if a PBX voice switch of a user requires synchronization with a remote synchronization network, the access device further transmits necessarily the synchronization information of the network. At this time, the PBX voice switch recovers the clock information from the data channel while receiving data from an access line and provides the recovered clock information for use by the P13X system. In this way, the clock information is conveyed level by level and locked level by level by lower-level devices to guarantee strict synchronization throughout the network, so that circuit services can be borne over the IP packet network.

As can be seen from the technical solutions above according to embodiments of the present invention, timing information for synchronization throughout the IP packet network may be provided over the network so as to implement properly uniform timing throughout the network, the IP packet network without timing is rebuilt into a synchronized network similar to a circuit network, and the advantage of a high bandwidth of the IP packet network remains. Thus, both service of circuit simulation and multi-service of high-bandwidth may be provided. Also the implementation according to embodiments of the present invention has a relatively low cost compared with rebuilding of a clock synchronization network.

In the embodiments above, descriptions have been made taking the interface board as an example. Meanwhile, the transmission module and reception module according to embodiments of the present invention may be provided not only in the interface board but also in a single board such as a service board, a network synchronization implementation of which is substantially the same as described above and descriptions thereof will not be repeated here.

The foregoing descriptions are merely illustrative of the preferred embodiments of the present invention, and the scope of the present invention shall not be limited to those embodiments. Any variations or alternatives which can readily occur to those skilled in the art in light of the technical discourse of the present invention shall fall within the slope of the claims appended to the present invention. Accordingly, the scope of the present invention shall be defined as the claims.

## Claims

1. A network device in a packet communication system, the network device comprising a plurality of interfaces, wherein
the network device is capable of IP synchronization and comprises a master control board, a switching backplane and at least two interface boards that each is provided with at least one interface among the plurality of interfaces, wherein a first interface provided in a first interface board comprises a first media access control, MAC, layer processing unit and a first physical layer processing unit, the master control board comprises a clock processing unit and a second interface provided in a second interface board comprises a second MAC layer processing unit and a second physical layer processing unit;
the first physical layer processing unit is adapted to exchange data with a first processing device in the packet communication system over a first data link, recover a clock signal from the first data link and transmit the recovered clock signal to the first MAC layer processing unit for reception of data and to the clock processing unit of the master control board via the switching backplane, respectively;
the clock processing unit of the master control board is adapted to process the recovered clock signal to obtain a reference clock signal and transmit the reference clock signal to the second interface board via the switching backplane; and
the second physical layer processing unit is adapted to exchange data with a second processing device in the packet communication system over a second data link, transmit data signals from the second MAC layer processing unit over the second data link, wherein the second physical layer processing unit is adapted to receive the reference clock signal and to transmit periodically the reference clock signal to a second processing device over the second data link and/or to mix the data signals from the second MAC layer processing unit with the reference clock signal as a line clock and transmit the mixed data signals to the second processing device.

2. The network device according to claim 1, wherein the first physical layer processing unit is adapted to mix data with clock information in a code mode and transmit the mixed data with clock information to the first MAC layer processing unit for reception of data.

3. The network device according to claim 2, wherein the plurality of interfaces are Ethernet interfaces or other IP packet network interfaces.

4. The network device according to claim 3, wherein the clock processing unit of the master control board comprise a phase locked loop circuit and a signal drive circuit; wherein: the phase locked loop circuit is adapted to lock the recovered clock signal from the first interface, and the signal drive circuit is adapted to drive the locked clock signal locked by the phase locked loop circuit into multiple signals and to transmit the multiple signals to the second interface board and other second interface boards as the reference clock signal, respectively.

5. The network device according to any one of claims 1 to 4, wherein the switching backplane is an Ethernet switching backplane or other IP packet network switching backplanes.

6. The network device according to claim 5, wherein the second interface further comprises a clock processing unit, adapted to process the reference clock signal from the master control board and transmit the reference clock signal processed thereon to the second MAC layer processing unit and the second physical layer processing unit so that the second physical layer processing unit transmits periodically the reference clock signal processed by the clock processing unit of the second interface to a second network device over the second data link and/or to mix the data signals from the second MAC layer processing unit with the reference clock signal the clock processing unit of the second interface as the line clock and transmit the mixed data signals to the second network device.

7. The network device according to claim 5, wherein when the first interface board transmits data to the first network device, the first physical layer processing unit is adapted to receive data transmitted from the first MAC layer processing unit, and to mix signals of the received data with a line clock signal, and transmits the mixed data signals with the line clock signal.

8. A packet communication system comprising a network device according to any one of claims 1 to 7, wherein the packet communication system further comprises a first processing device interfaced with the first interface of the network device and a second processing device interfaced with the second interface of the network device.

9. A method for network synchronization in a packet communication system, the method comprises:
recovering, by a first physical layer processing unit of a first interface at a first interface board of a network device, a clock signal over a first data link, wherein
the network device is capable of IP synchronization and the first physical layer processing unit is adapted to exchange data with a first processing device over the first data link;
transmitting the recovered clock signal from the first physical layer processing unit to a first media access control, MAC, layer processing unit of the first interface for reception of data and a to clock processing unit at a master control board of the network device via a switching backplane, respectively;
processing, by the clock processing unit at the master control board, the recovered clock signal to obtain a reference clock signal;
transmitting the reference clock signal from the clock processing unit at the master control board to a second interface board of the network device via the switching backplane; transmitting, by a second physical layer processing unit of a second interface at the second interface board, periodically the reference clock signal to a second processing device over a second data link and/or mixed data signals with data signals from the second MAC layer processing unit and the reference clock signal transmitted from the master control board to the second processing device over the second data link, wherein the second physical layer processing unit is adapted to exchange data with the second processing device over the data link.

10. The method according to claim 9, wherein the step of transmitting the recovered clock signal from the first physical layer processing unit to a first MAC layer processing unit comprises:
mixing, by the first physical layer processing unit, data with, clock information in a code mode and transmit the mixed data with clock information to the first MAC layer processing unit for reception of data.

11. The method according to claim 9 or 10, wherein the first interface and the second interface are Ethernet interfaces or other IP packet network interfaces.

12. The method according to claim 11, wherein before mixing data signals with the clock signal recovered from the data link via the first interface, the method further comprising:
locking, by a phase locked loop circuit of the clock processing unit at the master control board, the recovered clock signal from the first interface; and
driving, by a signal drive circuit of the clock processing unit at the master control board,
the locked signal into multiple signals provided for the second interface and other second interfaces as the reference clock signal, respectively.

## Patentansprüche

1. Netzvorrichtung in einem Paketkommunikationssystem, wobei die Netzvorrichtung mehrere Schnittstellen umfasst, wobei
die Netzvorrichtung zur IP-Synchronisation fähig ist und eine Master-Steuerleiterplatte, eine Schalt-Rückwandleiterplatte und wenigstens zwei Schnittstellen-Leiterplatten, von denen jede mit wenigstens einer Schnittstelle unter den mehreren Schnittstellen versehen ist, umfasst, wobei eine erste Schnittstelle, die auf einer ersten Schnittstellen-Leiterplatte vorgesehen ist, eine erste Verarbeitungseinheit für eine Medienzugriffssteuer-Schicht, MAC-Schicht, und eine erste Verarbeitungseinheit für eine physikalische Schicht umfasst, die Master-Steuerleiterplatte eine Taktverarbeitungseinheit umfasst und eine zweite Schnittstelle, die auf einer zweiten Schnittstellen-Leiterplatte vorgesehen ist, eine zweite Verarbeitungseinheit für eine MAC-Schicht und eine zweite Verarbeitungseinheit für eine physikalische Schicht umfasst;
die erste Verarbeitungseinheit für eine physikalische Schicht dazu ausgelegt ist, um über eine erste Datenverbindung mit einer ersten Verarbeitungsvorrichtung in dem Paketkommunikationssystem Daten auszutauschen, um ein Taktsignal von der ersten Datenverbindung zurückzugewinnen und um das zurückgewonnene Taktsignal über die Schalt-Rückwandleiterplatte an die erste Verarbeitungseinheit für eine MAC-Schicht für den Empfang von Daten bzw. an die Taktverarbeitungseinheit der Master-Steuerleiterplatte zu senden;
die Taktverarbeitungseinheit der Master-Steuerleiterplatte dazu ausgelegt ist, um das zurückgewonnene Taktsignal zu verarbeiten, um ein Bezugstaktsignal zu erhalten und um das Bezugstaktsignal über die Schalt-Rückwandleiterplatte an die zweite Schnittstellen-Leiterplatte zu senden; und
die zweite Verarbeitungseinheit für eine physikalische Schicht dazu ausgelegt ist, um Daten über eine zweite Datenverbindung mit einer zweiten Verarbeitungsvorrichtung in dem Paketkommunikationssystem auszutauschen, um Datensignale von der zweiten Verarbeitungseinheit für eine MAC-Schicht über die zweite Datenverbindung zu senden, wobei die zweite Verarbeitungseinheit für eine physikalische Schicht dazu ausgelegt ist, um das Bezugstaktsignal zu empfangen und um das Bezugstaktsignal periodisch über die zweite Datenverbindung an eine zweite Verarbeitungsvorrichtung zu senden und/oder die Datensignale von der zweiten Verarbeitungseinheit für eine MAC-Schicht mit dem Bezugstaktsignal als einen Leitungstakt zu mischen und die gemischten Datensignale an die zweite Verarbeitungsvorrichtung zu senden.

2. Netzvorrichtung nach Anspruch 1, wobei die erste Verarbeitungseinheit für eine physikalische Schicht dazu ausgelegt ist, um Daten in einer Codebetriebsart mit Taktinformationen zu mischen und um die gemischten Daten mit Taktinformationen für den Empfang von Daten an die erste Verarbeitungseinheit für eine MAC-Schicht zu senden.

3. Netzvorrichtung nach Anspruch 2, wobei die mehreren Schnittstellen Ethernet-Schnittstellen oder Schnittstellen eines weiteren IP-Paket-Netzes sind.

4. Netzvorrichtung nach Anspruch 3, wobei die Taktverarbeitungseinheit der Master-Steuerleiterplatte einen Phasenregelkreis und eine Signalansteuerschaltung umfasst; wobei: der Phasenregelkreis dazu ausgelegt ist, um das zurückgewonnene Taktsignal von der ersten Schnittstelle zu verriegeln, und die Signalansteuerschaltung dazu ausgelegt ist, um das verriegelte Taktsignal, das durch den Phasenregelkreis verriegelt worden ist, in mehrere Signale anzusteuern und um die mehreren Signale an die zweite Schnittstellen-Leiterplatte bzw. an weitere zweite Schnittstellen-Leiterplatten als das Bezugstaktsignal zu senden.

5. Netzvorrichtung nach einem der Ansprüche 1 bis 4, wobei die Schalt-Rückwandleiterplatte eine Ethernet-Schalt-Rückwandleiterplatte oder Schalt-Rückwandleiterplatten eines weiteren IP-Paket-Netzes ist.

6. Netzvorrichtung nach Anspruch 5, wobei die zweite Schnittstelle ferner eine Taktverarbeitungseinheit umfasst, die dazu ausgelegt ist, um das Bezugstaktsignal von der Master-Steuerleiterplatte zu verarbeiten und das auf ihr verarbeitete Bezugstaktsignal an die zweite Verarbeitungseinheit für eine MAC-Schicht und an die zweite Verarbeitungseinheit für eine physikalische Schicht zu senden, so dass die zweite Verarbeitungseinheit für eine physikalische Schicht das durch die Taktverarbeitungseinheit der zweiten Schnittstelle verarbeitete Bezugstaktsignal periodisch über die zweite Datenverbindung an eine zweite Netzvorrichtung sendet, und/oder um die Datensignale von der zweiten Verarbeitungseinheit für eine MAC-Schicht mit dem Bezugstaktsignal der Taktverarbeitungseinheit der zweiten Schnittstelle als den Leitungstakt zu mischen und die gemischten Datensignale an die zweite Netzvorrichtung zu senden.

7. Netzvorrichtung nach Anspruch 5, wobei, wenn die erste Schnittstellen-Leiterplatte Daten an die erste Netzvorrichtung sendet, die erste Verarbeitungseinheit für eine physikalische Schicht dazu ausgelegt ist, um von der ersten Verarbeitungseinheit für eine MAC-Schicht gesendete Daten zu empfangen und Signale der empfangenen Daten mit einem Leitungstaktsignal zu mischen, und die gemischten Datensignale mit dem Leitungstaktsignal sendet.

8. Paketkommunikationssystem, das eine Netzvorrichtung nach einem der Ansprüche 1 bis 7 umfasst, wobei das Paketkommunikationssystem ferner eine erste Verarbeitungsvorrichtung, die mit der ersten Schnittstelle der Netzvorrichtung verbunden ist, und eine zweite Verarbeitungsvorrichtung, die mit der zweiten Schnittstelle der Netzvorrichtung verbunden ist, umfasst.

9. Verfahren für die Netzsynchronisation in einem Paketkommunikationssystem, wobei das Verfahren Folgendes umfasst:
Zurückgewinnen durch eine erste Verarbeitungseinheit für eine physikalische Schicht einer ersten Schnittstelle auf einer ersten Schnittstellen-Leiterplatte einer Netzvorrichtung eines Taktsignals über eine erste Datenverbindung, wobei die Netzvorrichtung zur IP-Synchronisation fähig ist und die erste Verarbeitungseinheit für eine physikalische Schicht dazu ausgelegt ist, um über die erste Datenverbindung mit einer ersten Verarbeitungsvorrichtung Daten auszutauschen;
Senden des zurückgewonnenen Taktsignals von der ersten Verarbeitungseinheit für eine physikalische Schicht über eine Schalt-Rückwandleiterplatte an eine erste Verarbeitungseinheit für eine Medienzugriffssteuer-Schicht, MAC-Schicht, der ersten Schnittstelle für den Empfang von Daten bzw. an eine Taktverarbeitungseinheit auf einer Master-Steuerleiterplatte der Netzvorrichtung;
Verarbeiten durch die Taktverarbeitungseinheit auf der Master-Steuerleiterplatte des zurückgewonnenen Taktsignals, um ein Bezugstaktsignal zu erhalten;
Senden des Bezugstaktsignals von der Taktverarbeitungseinheit auf der Master-Steuerleiterplatte über die Schalt-Rückwandleiterplatte an eine zweite Schnittstellen-Leiterplatte der Netzvorrichtung; periodisches Senden durch eine zweite Verarbeitungseinheit für eine physikalische Schicht einer zweiten Schnittstelle auf der zweiten Schnittstellen-Leiterplatte des Bezugstaktsignals über eine zweite Datenverbindung an eine zweite Verarbeitungsvorrichtung und/oder von mit Datensignalen von der zweiten Verarbeitungseinheit für eine MAC-Schicht und dem von der Master-Steuerleiterplatte gesendeten Bezugstaktsignal gemischten Datensignalen über die zweite Datenverbindung an die zweite Verarbeitungsvorrichtung, wobei die zweite Verarbeitungseinheit für eine physikalische Schicht dazu ausgelegt ist, um über die Datenverbindung mit der zweiten Verarbeitungsvorrichtung Daten auszutauschen.

10. Verfahren nach Anspruch 9, wobei der Schritt des Sendens des zurückgewonnenen Taktsignals von der ersten Verarbeitungseinheit für eine physikalische Schicht an eine erste Verarbeitungseinheit für eine MAC-Schicht Folgendes umfasst:
Mischen durch die erste Verarbeitungseinheit für eine physikalische Schicht von Daten mit Taktinformationen in einer Codebetriebsart und Senden der gemischten Daten mit Taktinformationen an die erste Verarbeitungseinheit für eine MAC-Schicht für den Empfang von Daten.

11. Verfahren nach Anspruch 9 oder 10, wobei die erste Schnittstelle und die zweite Schnittstelle Ethernet-Schnittstellen oder Schnittstellen eines weiteren IP-Paket-Netzes sind.

12. Verfahren nach Anspruch 11, wobei vor dem Mischen von Datensignalen mit dem über die erste Schnittstelle von der Datenverbindung zurückgewonnenen Taktsignal das Verfahren ferner Folgendes umfasst:
Verriegeln durch einen Phasenregelkreis der Taktverarbeitungseinheit auf der Master-Steuerleiterplatte des zurückgewonnenen Taktsignals von der ersten Schnittstelle; und
Ansteuern durch eine Signalansteuerschaltung der Taktverarbeitungseinheit auf der Master-Steuerleiterplatte des verriegelten Signals in mehrere Signale, die für die zweite Schnittstelle bzw. weitere zweite Schnittstellen als das Bezugstaktsignal bereitgestellt werden.

## Revendications

1. Dispositif de réseau dans un système de communication par paquets, le dispositif de réseau comprenant une pluralité d'interfaces,
le dispositif de réseau permettant une synchronisation IP et comprenant une carte de commande principale, un fond de panier de commutation et au moins deux cartes d'interface disposant chacune d'au moins une interface parmi la pluralité d'interfaces, une première interface disposée dans une première carte d'interface comprenant une première unité de traitement de couche de commande d'accès au support, dite MAC, et une première unité de traitement de couche physique, la carte de commande principale comprenant une unité de traitement d'horloge et une deuxième interface disposée dans une deuxième carte d'interface comprenant une deuxième unité de traitement de couche MAC et une deuxième unité de traitement de couche physique ;
la première unité de traitement de couche physique étant conçue pour échanger des données avec un premier dispositif de traitement dans le système de communication par paquets sur une première liaison de données, récupérer de la première liaison de données un signal d'horloge et transmettre le signal d'horloge récupéré respectivement à la première unité de traitement de couche MAC pour permettre la réception de données et à l'unité de traitement d'horloge de la carte de commande principale au moyen du fond de panier de commutation ;
l'unité de traitement d'horloge de la carte de commande principale étant conçue pour traiter le signal d'horloge récupéré afin d'obtenir un signal d'horloge de référence et transmettre le signal d'horloge de référence à la deuxième carte d'interface au moyen du fond de panier de commutation ; et
la deuxième unité de traitement de couche physique étant conçue pour échanger des données avec un deuxième dispositif de traitement dans le système de communication par paquets sur une deuxième liaison de données, transmettre des signaux de données en provenance de la deuxième unité de traitement de couche MAC sur la deuxième liaison de données, la deuxième unité de traitement de couche physique étant conçue pour recevoir le signal d'horloge de référence et pour transmettre périodiquement le signal d'horloge de référence à un deuxième dispositif de traitement sur la deuxième liaison de données et/ou pour mélanger les signaux de données en provenance de la deuxième unité de traitement de couche MAC au signal d'horloge de référence en tant qu'horloge de ligne et transmettre les signaux de données mélangés au deuxième dispositif de traitement.

2. Dispositif de réseau selon la revendication 1, la première unité de traitement de couche physique étant conçue pour mélanger des données aux informations d'horloge dans un mode de code et transmettre les données mélangées aux informations d'horloge à la première unité de traitement de couche MAC pour permettre la réception de données.

3. Dispositif de réseau selon la revendication 2, la pluralité d'interfaces étant des interfaces Ethernet ou d'autres interfaces de réseau par paquets IP.

4. Dispositif de réseau selon la revendication 3, l'unité de traitement d'horloge de la carte de commande principale comprenant un circuit d'asservissement de phase et un circuit d'attaque de signal ; le circuit d'asservissement de phase étant conçu pour verrouiller le signal d'horloge récupéré en provenance de la première interface, et le circuit d'attaque de signal étant conçu pour attaquer le signal d'horloge verrouillé, verrouillé par le circuit d'asservissement de phase, de manière à générer de multiples signaux et pour transmettre les multiples signaux respectivement à la deuxième carte d'interface et à d'autres deuxièmes cartes d'interface comme signal d'horloge de référence.

5. Dispositif de réseau selon l'une quelconque des revendications 1 à 4, le fond de panier de commutation étant un fond de panier de commutation Ethernet ou d'autres fonds de panier de commutation de réseau par paquets IP.

6. Dispositif de réseau selon la revendication 5, la deuxième interface comprenant en outre une unité de traitement d'horloge conçue pour traiter le signal d'horloge de référence en provenance de la carte de commande principale et transmettre le signal d'horloge de référence traité sur celle-ci à la deuxième unité de traitement de couche MAC et à la deuxième unité de traitement de couche physique de telle sorte que la deuxième unité de traitement de couche physique transmette périodiquement le signal d'horloge de référence ainsi traité par l'unité de traitement d'horloge de la deuxième interface à un deuxième dispositif de réseau sur la deuxième liaison de données et/ou pour mélanger les signaux de données en provenance de la deuxième unité de traitement de couche MAC au signal d'horloge de référence en provenance de l'unité de traitement d'horloge de la deuxième interface en tant qu'horloge de ligne et transmettre les signaux de données mélangés au deuxième dispositif de réseau.

7. Dispositif de réseau selon la revendication 5, lorsque la première carte d'interface transmet des données au premier dispositif de réseau, la première unité de traitement de couche physique étant conçue pour recevoir des données transmises de la première unité de traitement de couche MAC et pour mélanger des signaux des données reçues à un signal d'horloge de ligne, et transmettant les signaux de données mélangés au signal d'horloge de ligne.

8. Système de communication par paquets, comprenant un dispositif de réseau selon l'une quelconque des revendications 1 à 7, le système de communication par paquets comprenant en outre un premier dispositif de traitement en interface avec la première interface du dispositif de réseau et un deuxième dispositif de traitement en interface avec la deuxième interface du dispositif de réseau.

9. Procédé de synchronisation de réseau dans un système de communication par paquets, le procédé comprenant les étapes consistant à :
récupérer, par une première unité de traitement de couche physique d'une première interface au niveau d'une première carte d'interface d'un dispositif de réseau, un signal d'horloge sur une première liaison de données, le dispositif de réseau permettant une synchronisation IP et la première unité de traitement de couche physique étant conçue pour échanger des données avec un premier dispositif de traitement sur la première liaison de données ;
transmettre le signal d'horloge récupéré en provenance de la première unité de traitement de couche physique respectivement à une première unité de traitement de couche de commande d'accès au support, dite MAC, de la première interface pour permettre la réception de données et à une unité de traitement d'horloge au niveau d'une carte de commande principale du dispositif de réseau au moyen d'un fond de panier de commutation ;
traiter, par l'unité de traitement d'horloge au niveau de la carte de commande principale, le signal d'horloge récupéré afin d'obtenir un signal d'horloge de référence ;
transmettre le signal d'horloge de référence en provenance de l'unité de traitement d'horloge au niveau de la carte de commande principale à une deuxième carte d'interface du dispositif de réseau au moyen du fond de panier de commutation ;
transmettre, par une deuxième unité de traitement de couche physique d'une deuxième interface au niveau de la deuxième carte d'interface, périodiquement le signal d'horloge de référence à un deuxième dispositif de traitement sur une deuxième liaison de données et/ou des signaux de données mélangés aux signaux de données en provenance de la deuxième unité de traitement de couche MAC et le signal d'horloge de référence transmis de la carte de commande principale au deuxième dispositif de traitement sur la deuxième liaison de données, la deuxième unité de traitement de couche physique étant conçue pour échanger des données avec le deuxième dispositif de traitement sur la liaison de données.

10. Procédé selon la revendication 9, l'étape consistant à transmettre le signal d'horloge récupéré en provenance de la première unité de traitement de couche physique à une première unité de traitement de couche MAC comprenant l'étape consistant à :
mélanger, par la première unité de traitement de couche physique, des données avec aux informations d'horloge dans un mode de code et transmettre les données mélangées aux informations d'horloge à la première unité de traitement de couche MAC pour permettre la réception de données.

11. Procédé selon la revendication 9 ou 10, la première interface et la deuxième interface étant des interfaces Ethernet ou d'autres interfaces de réseau par paquets IP.

12. Procédé selon la revendication 11, avant de mélanger des signaux de données au signal d'horloge récupéré de la liaison de données au moyen de la première interface, le procédé comprenant en outre les étapes consistant à :
verrouiller, par un circuit d'asservissement de phase de l'unité de traitement d'horloge au niveau de la carte de commande principale, le signal d'horloge récupéré en provenance de la première interface ; et
attaquer, par un circuit d'attaque de signal de l'unité de traitement d'horloge au niveau de la carte de commande principale, le signal verrouillé de manière à générer de multiples signaux transmis respectivement à la deuxième interface et à d'autres deuxièmes interfaces en tant que signal d'horloge de référence.
